(19) Europäisches Patentamt
European Patent Office
Office européen des brevets

(11) **EP 4 366 426 A1**

(12) **EUROPEAN PATENT APPLICATION**

(43) Date of publication:
**08.05.2024 Bulletin 2024/19**

(51) International Patent Classification (IPC):
**H04W 72/0453** (2023.01)  **H04W 72/0457** (2023.01)
**H04W 74/00** (2009.01)  **H04L 25/00** (2006.01)
**H04L 27/00** (2006.01)

(21) Application number: **23198164.8**

(22) Date of filing: **19.09.2023**

(52) Cooperative Patent Classification (CPC):
**H04W 72/0457; H04L 1/08; H04L 25/0228;
H04L 25/03828;** H04L 5/0044; H04W 72/0446;
H04W 72/0453; H04W 72/1268

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 FI 20225995**

(71) Applicant: **Nokia Technologies Oy**
**02610 Espoo (FI)**

(72) Inventors:
• **PERUGA NASARRE, Ismael**
**28019 Madrid (ES)**

• **SAAD, Majed**
**91300 Massy (FR)**
• **PELTOLA, Ari**
**90540 Oulu (FI)**
• **MASO, Marco**
**92130 Issy les Moulineaux (FR)**
• **NHAN, Nhat-Quang**
**51100 Reims (FR)**

(74) Representative: **Nokia EPO representatives**
**Nokia Technologies Oy**
**Karakaari 7**
**02610 Espoo (FI)**

(54) **UPLINK TRANSMISSION OVER MULTIPLE SLOTS WITH EXCESS BAND**

(57) Disclosed is a method comprising receiving first information indicating a first excess band; receiving second information indicating a second excess band; determining a third excess band for one or more multi-slot uplink transmissions, wherein the third excess band is determined based on the first excess band and the second excess band; and transmitting the one or more multi-slot uplink transmissions over multiple slots with the third excess band.

**EP 4 366 426 A1**

```
┌──────┬──────────────────────────────────────────────────────┐
│ 1101 │ Receive first information indicating a first excess band │
└──────┴──────────────────────────────────────────────────────┘
                              ↓
┌──────┬──────────────────────────────────────────────────────┐
│ 1102 │ Receive second information indicating a second excess    │
│      │ band                                                     │
└──────┴──────────────────────────────────────────────────────┘
                              ↓
┌──────┬──────────────────────────────────────────────────────┐
│ 1103 │ Determine a third excess band based on the first excess  │
│      │ band and the second excess band                          │
└──────┴──────────────────────────────────────────────────────┘
                              ↓
┌──────┬──────────────────────────────────────────────────────┐
│ 1104 │ Transmit one or more multi-slot uplink transmissions     │
│      │ over multiple slots with the third excess band           │
└──────┴──────────────────────────────────────────────────────┘
```

FIG. 11

## Description

FIELD

The following example embodiments relate to wireless communication.

BACKGROUND

Operating wireless communication systems at higher frequency bands results in higher path loss and decreased coverage performance. It is desirable to provide techniques for improving coverage.

BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions which, when executed by the at least one processor, cause the apparatus at least to: receive first information indicating a first excess band; receive second information indicating a second excess band; determine a third excess band for one or more multi-slot uplink transmissions, wherein the third excess band is determined based on the first excess band and the second excess band; and transmit the one or more multi-slot uplink transmissions over multiple slots with the third excess band.

According to another aspect, there is provided an apparatus comprising: means for receiving first information indicating a first excess band; means for receiving second information indicating a second excess band; means for determining a third excess band for one or more multi-slot uplink transmissions, wherein the third excess band is determined based on the first excess band and the second excess band; and means for transmitting the one or more multi-slot uplink transmissions over multiple slots with the third excess band.

According to another aspect, there is provided a method comprising: receiving first information indicating a first excess band; receiving second information indicating a second excess band; determining a third excess band for one or more multi-slot uplink transmissions, wherein the third excess band is determined based on the first excess band and the second excess band; and transmitting the one or more multi-slot uplink transmissions over multiple slots with the third excess band.

According to another aspect, there is provided a computer program comprising instructions which, when executed by an apparatus, cause the apparatus to perform at least the following: receiving first information indicating a first excess band; receiving second information indicating a second excess band; determining a third excess band for one or more multi-slot uplink transmissions, wherein the third excess band is determined based on the first excess band and the second excess band; and transmitting the one or more multi-slot uplink transmissions over multiple slots with the third excess band.

According to another aspect, there is provided a computer readable medium comprising program instructions which, when executed by an apparatus, cause the apparatus to perform at least the following: receiving first information indicating a first excess band; receiving second information indicating a second excess band; determining a third excess band for one or more multi-slot uplink transmissions, wherein the third excess band is determined based on the first excess band and the second excess band; and transmitting the one or more multi-slot uplink transmissions over multiple slots with the third excess band.

According to another aspect, there is provided a non-transitory computer readable medium comprising program instructions which, when executed by an apparatus, cause the apparatus to perform at least the following: receiving first information indicating a first excess band; receiving second information indicating a second excess band; determining a third excess band for one or more multi-slot uplink transmissions, wherein the third excess band is determined based on the first excess band and the second excess band; and transmitting the one or more multi-slot uplink transmissions over multiple slots with the third excess band.

According to another aspect, there is provided an apparatus comprising at least one processor, and at least one memory storing instructions which, when executed by the at least one processor, cause the apparatus at least to: transmit first information indicating a first excess band; transmit second information indicating a second excess band; and receive one or more multi-slot uplink transmissions over multiple slots with a third excess band, wherein the third excess band is based on the first excess band and the second excess band.

According to another aspect, there is provided an apparatus comprising: means for transmitting first information indicating a first excess band; means for transmitting second information indicating a second excess band; and means for receiving one or more multi-slot uplink transmissions over multiple slots with a third excess band, wherein the third excess band is based on the first excess band and the second excess band.

According to another aspect, there is provided a method comprising: transmitting first information indicating a first excess band; transmitting second information indicating a second excess band; and receiving one or more multi-slot uplink transmissions over multiple slots with a third excess band, wherein the third excess band is based on the first excess band and the second excess band.

According to another aspect, there is provided a computer program comprising instructions which, when executed by an apparatus, cause the apparatus to perform at least the following: transmitting first information indicating a first excess band; transmitting second information indicating a second excess band; and receiving one or more multi-slot uplink transmissions over multiple slots with a third excess band, wherein the third excess band is based on the first excess band and the second excess band.

According to another aspect, there is provided a computer readable medium comprising program instructions which, when executed by an apparatus, cause the apparatus to perform at least the following: transmitting first information indicating a first excess band; transmitting second information indicating a second excess band; and receiving one or more multi-slot uplink transmissions over multiple slots with a third excess band, wherein the third excess band is based on the first excess band and the second excess band.

According to another aspect, there is provided a non-transitory computer readable medium comprising program instructions which, when executed by an apparatus, cause the apparatus to perform at least the following: transmitting first information indicating a first excess band; transmitting second information indicating a second excess band; and receiving one or more multi-slot uplink transmissions over multiple slots with a third excess band, wherein the third excess band is based on the first excess band and the second excess band.

LIST OF DRAWINGS

In the following, various example embodiments will be described in greater detail with reference to the accompanying drawings, in which

FIG. 1 illustrates an example of a cellular communication network;
FIG. 2 illustrates an example of the new radio Release 16 Release 17 number of repetitions and latency for physical uplink shared channel repetition type A;
FIG. 3 illustrates an example of power spectral density and time domain transmission;
FIG. 4 illustrates the usage of a circular buffer at a user device;
FIG. 5 illustrates joint channel estimation for physical uplink shared channel;
FIG. 6 illustrates a block diagram of an uplink transmitter with spectrum shaping and a spectrum extension chain;
FIG. 7 illustrates the achievable net (coverage) gain of transmission of discrete Fourier transform spread orthogonal frequency division multiplexing with frequency-domain spectrum shaping with spectrum extension;
FIG. 8 illustrates a power spectral density comparison of different transmissions;

FIG. 9 illustrates a signaling diagram;
FIG. 10 illustrates a signaling diagram;
FIG. 11 illustrates a flow chart;
FIG. 12 illustrates a flow chart;
FIG. 13 illustrates a flow chart;
FIG. 14 illustrates a flow chart;
FIG. 15 illustrates an example of back-to-back transmissions;
FIG. 16 illustrates a flow chart;
FIG. 17 illustrates a flow chart;
FIG. 18 illustrates a flow chart;
FIG. 19 illustrates a flow chart;
FIG. 20 illustrates a flow chart;
FIG. 21 illustrates an example of an apparatus; and
FIG. 22 illustrates an example of an apparatus.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different example embodiments will be described using, as an example of an access architecture to which the example embodiments may be applied, a radio access architecture based on long term evolution advanced (LTE Advanced, LTE-A), new radio (NR, 5G), beyond 5G, or sixth generation (6G) without restricting the example embodiments to such an architecture, however. It is obvious for a person skilled in the art that the example embodiments may also be applied to other kinds of communications networks having suitable means by adjusting parameters and procedures appropriately. Some examples of other options for suitable systems may be the universal mobile telecommunications system (UMTS) radio access network (UTRAN or E-UTRAN), long term evolution (LTE, substantially the same as E-UTRA), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

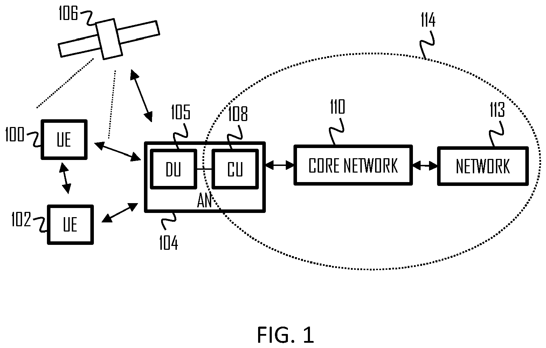

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may also comprise other functions and structures than those shown in FIG. 1.

The example embodiments are not, however, restricted to the system given as an example but a person skilled in the art may apply the solution to other communication systems provided with necessary properties.

The example of FIG. 1 shows a part of an exemplifying radio access network.

FIG. 1 shows user devices 100 and 102 configured to be in a wireless connection on one or more communication channels in a radio cell with an access node (AN) 104, such as an evolved Node B (abbreviated as eNB or eNodeB) or a next generation Node B (abbreviated as gNB or gNodeB), providing the radio cell. The physical link from a user device to an access node may be called uplink (UL) or reverse link, and the physical link from the access node to the user device may be called downlink (DL) or forward link. A user device may also communicate directly with another user device via sidelink (SL) communication. It should be appreciated that access nodes or their functionalities may be implemented by using any node, host, server or access point etc. entity suitable for such a usage.

A communication system may comprise more than one access node, in which case the access nodes may also be configured to communicate with one another over links, wired or wireless, designed for the purpose. These links may be used for signaling purposes and also for routing data from one access node to another. The access node may be a computing device configured to control the radio resources of communication system it is coupled to. The access node may also be referred to as a base station, a base transceiver station (BTS), an access point or any other type of interfacing device including a relay station capable of operating in a wireless environment. The access node may include or be coupled to transceivers. From the transceivers of the access node, a connection may be provided to an antenna unit that establishes bi-directional radio links to user devices. The antenna unit may comprise a plurality of antennas or antenna elements. The access node may further be connected to a core network 110 (CN or next generation core NGC). Depending on the deployed technology, the counterpart that the access node may be connected to on the CN side may be a serving gateway (S-GW, routing and forwarding user data packets), packet data network gateway (P-GW) for providing connectivity of user devices to external packet data networks, user plane function (UPF), mobility management entity (MME), or an access and mobility management function (AMF), etc.

The user device illustrates one type of an apparatus to which resources on the air interface may be allocated and assigned, and thus any feature described herein with a user device may be implemented with a corresponding apparatus, such as a relay node.

An example of such a relay node may be a layer 3 relay (self-backhauling relay) towards the access node. The self-backhauling relay node may also be called an integrated access and backhaul (IAB) node. The IAB node may comprise two logical parts: a mobile termination (MT) part, which takes care of the backhaul link(s) (i.e., link(s) between IAB node and a donor node, also known as a parent node) and a distributed unit (DU) part, which takes care of the access link(s), i.e., child link(s) between the IAB node and user device(s), and/or between the IAB node and other IAB nodes (multi-hop scenario).

Another example of such a relay node may be a layer 1 relay called a repeater. The repeater may amplify a signal received from an access node and forward it to a user device, and/or amplify a signal received from the user device and forward it to the access node.

The user device may also be called a subscriber unit, mobile station, remote terminal, access terminal, user terminal, terminal device, or user equipment (UE) just to mention but a few names or apparatuses. The user device may refer to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, multimedia device, reduced capability (RedCap) device, wireless sensor device, or any device integrated in a vehicle.

It should be appreciated that a user device may also be a nearly exclusive uplink-only device, of which an example may be a camera or video camera loading images or video clips to a network. A user device may also be a device having capability to operate in Internet of Things (IoT) network which is a scenario in which objects may be provided with the ability to transfer data over a network without requiring human-to-human or human-to-computer interaction. The user device may also utilize cloud. In some applications, a user device may comprise a small portable or wearable device with radio parts (such as a watch, earphones or eyeglasses) and the computation may be carried out in the cloud or in another user device. The user device (or in some example embodiments a layer 3 relay node) may be configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications may support a wide range of use cases and related applications including video streaming, augmented reality, different ways of data sharing and various forms of machine type applications (such as (massive) machine-type communications (mMTC), including vehicular safety, different sensors and real-time control. 5G may have multiple radio interfaces, namely below 6GHz, cmWave and mmWave, and also being integrable with existing legacy radio access technologies, such as the LTE. Integration with the LTE may be implemented, at least in the early phase, as a system, where macro coverage may be provided by the LTE, and 5G radio interface access may come from small cells by aggregation to the LTE. In other words, 5G may support both inter-RAT operability (such as LTE-5G) and inter-RI operability (inter-radio interface operability, such as below 6GHz - cmWave - mmWave). One of the concepts considered to be used in 5G networks may be network slicing, in which multiple independent and dedicated virtual sub-networks (network instances) may be created within the substantially same infrastructure to run services that have different requirements on latency, reliability, throughput and mobility.

The current architecture in LTE networks may be fully distributed in the radio and fully centralized in the core network. The low latency applications and services in 5G may need to bring the content close to the radio which leads to local break out and multi-access edge computing (MEC). 5G may enable analytics and knowledge generation to occur at the source of the data. This approach may need leveraging resources that may not be continuously connected to a network such as laptops, smartphones, tablets and sensors. MEC may provide a distributed computing environment for application and service hosting. It may also have the ability to store and process content in close proximity to cellular subscribers for faster response time. Edge computing may cover a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system may also be able to communicate with one or more other networks 113, such as a public switched telephone network or the Internet, or utilize services provided by them. The communication network may also be able to support the usage of cloud services, for example at least part of core network operations may be carried out as a cloud service (this is depicted in FIG. 1 by "cloud" 114). The communication system may also comprise a central control entity, or the like, providing facilities for networks of different operators to cooperate for example in spectrum sharing.

An access node may also be split into: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such a split may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be defined as a logical node hosting higher layer protocols, such as radio resource control (RRC), service data adaptation protocol (SDAP) and/or packet data convergence protocol (PDCP), of the access node. The DU 105 may be defined as a logical node hosting radio link control (RLC), medium access control (MAC) and/or physical (PHY) layers of the access node. The operation of the DU may be at least partly controlled by the CU. The CU may comprise a control plane (CU-CP), which may be defined as a logical node hosting the RRC and the control plane part of the PDCP protocol of the CU for the access node. The CU may further comprise a user plane (CU-UP), which may be defined as a logical node hosting the user plane part of the PDCP protocol and the SDAP protocol of the CU for the access node.

Cloud computing platforms may also be used to run the CU 108 and/or DU 105. The CU may run in a cloud computing platform, which may be referred to as a virtualized CU (vCU). In addition to the vCU, there may also be a virtualized DU (vDU) running in a cloud computing platform. Furthermore, there may also be a combination, where the DU may use so-called bare metal solutions, for example application-specific integrated circuit (ASIC) or customer-specific standard product (CSSP) system-on-a-chip (SoC) solutions. It should also be understood that the distribution of functions between the above-mentioned access node units, or different core network operations and access node operations, may differ.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head (RRH) or a radio unit (RU), or an access node comprising radio parts. It is also possible that node operations may be distributed among a plurality of servers, nodes or hosts. Application of cloudRAN architecture enables RAN real-time functions being carried out at the RAN side (e.g., in a DU 105) and non-real-time functions being carried out in a centralized manner (e.g., in a CU 108).

It should also be understood that the distribution of functions between core network operations and access node operations may differ from that of the LTE or even be non-existent. Some other technology advancements that may be used include big data and all-IP, which may change the way networks are being constructed and managed. 5G (or new radio, NR) networks may be designed to support multiple hierarchies, where MEC servers may be placed between the core and the access node. It should be appreciated that MEC may be applied in 4G networks as well.

5G may also utilize non-terrestrial communication, for example satellite communication, to enhance or complement the coverage of 5G service, for example by providing backhauling. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay node or by an access node 104 located on-ground or in a satellite.

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

It is obvious for a person skilled in the art that the depicted system is only an example of a part of a radio access system and in practice, the system may comprise a plurality of access nodes, the user device may have access to a plurality of radio cells and the system may also comprise other apparatuses, such as physical layer relay nodes or other network elements, etc. At least one of the access nodes may be a Home eNodeB or a Home gNodeB.

Additionally, in a geographical area of a radio communication system, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1 may provide any kind of these cells. A cellular radio system may be implemented as a multilayer network including several kinds of radio cells. In multilayer networks, one access node may provide one kind of a radio cell or radio cells, and thus a plurality of access nodes may be needed to provide such a network structure.

For fulfilling the need for improving the deployment and performance of communication systems, the concept of "plug-and-play" access nodes may be introduced. A network which may be able to use "plug-and-play" access nodes, may include, in addition to Home eNodeBs or Home gNodeBs, a Home Node B gateway, or HNB-GW (not shown in FIG. 1). An HNB-GW, which may be installed within an operator's network, may aggregate traffic from a large number of Home eNodeBs or Home gNodeBs back to a core network.

There may be at least two types of uplink (UL) transmissions: dynamic grant (DG) and configured grant (CG) transmission. In DG transmission, the UE transmits a scheduling request (SR) to the access node (e.g., gNB) and receives an UL grant with a resource allocation. In CG transmission, the UE transmits UL data in the configured resources without the transmission of SR and UL grant, and thus the use of CG transmission may reduce latency compared to DG transmission. Currently, there are two types of CG configuration: type 1 CG and type 2 CG.

In type 1 CG, radio resource control (RRC) signaling indicates the full time-domain resource allocation including periodicity, offset, start symbol and length of physical uplink shared channel (PUSCH) and K repetitions over K slots/sub-slots (*repK*) without any signaling of physical layer, such as downlink control information (DCI). Herein the term "slot" refers to a time slot.

In type 2 CG, periodicity and *repK* may be indicated via RRC signaling. The other time-domain-related parameters may be indicated through the activation DCI.

In both DG and CG transmission, one PUSCH transmission instance is not allowed to cross the slot boundary. Therefore, to avoid transmitting a long PUSCH across the slot boundary, the UE may transmit small PUSCHs in several repetitions scheduled by an UL grant or RRC in the consecutive available transmission occasions. The use of PUSCH repetitions for one transport block (TB) may also reduce latency and increase reliability of PUSCH transmission, where a UE may be configured to transmit a number of repetitions across consecutive transmission occasions without feedback.

In PUSCH repetition type A, a given slot may comprise one repetition and the time domain for the repetitions of a TB is the same in those slots.

In PUSCH repetition type B, the repetitions may be carried out in consecutive mini-slots, so that one slot may comprise more than one repetition of a TB. The repetitions may be segmented into smaller repetitions due to the slot boundary, downlink (DL) symbols and the symbols in an invalid pattern.

In NR Release 17, there was an objective to increase the maximum number of PUSCH repetitions from 16 (in NR Release 16) up to 32. The number of repetitions may be counted on the basis of available uplink slots.

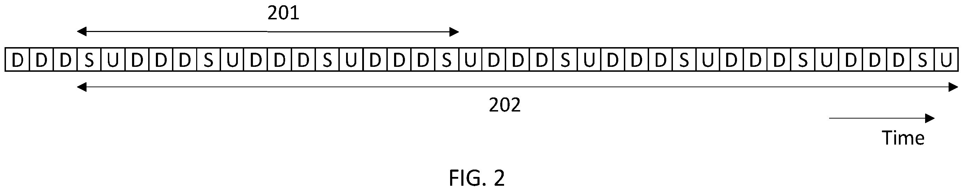

FIG. 2 illustrates an example of the NR Release 16 and Release 17 number of repetitions and latency for PUSCH repetition type A. FIG. 2 shows both the NR Release 16 technique and the NR Release 17 technique to calculate the number of repetitions. In FIG. 2, "D" denotes a downlink slot, "S" denotes a special slot, and "U" denotes an uplink slot.

For example, in NR Release 16, the indicated number of repetitions may be 16, the actual number of repetitions may be 7, and the latency from the first repetition to the last repetition may be 16 slots, as indicated by the arrow 201.

In NR Release 17, the indicated number of repetitions may be 16, the actual number of repetitions may be 16, and the latency from the first repetition to the last repetition may be 37 slots, as indicated by the arrow 202.

In the example of FIG. 2, PUSCH may be transmitted both in uplink slots and special slots. The NR Release 17 technique considers the available slots, which may include both UL and special slots depending on the used amount of PUSCH resources within a slot. For example, if 7 orthogonal frequency-division multiplexing (OFDM) symbols are configured for PUSCH transmission, and there are less than 7 OFDM symbols in a special slot, then the special slot may not be calculated as an available slot.

Both of these calculation techniques were agreed to be taken to the NR Release 17 specification.

NR Release 17 PUSCH repetition type A may support an increase (compared to NR Release 16) of the maximum number of repetitions with repetition factors configured in a time domain resource allocation (TDRA) list with a row index indicated, for example, by the CG configuration or by a TDRA field in DCI.

Redundancy version (RV) cycling may be based on 'available slot' with repetitions counted based on available slot in NR Release 17. This may be similar to what it was in NR Release 16, while back-to-back physical slots were used in NR Release 16 for PUSCH. RV may be cycled across transmission occasions, irrespective of whether PUSCH transmission in the transmission occasion is further omitted or not.

Regarding transport block processing over multiple slots (TBoMS), in NR Release 17, there was an objective to determine the transport block size (TBS) based on multiple slots and transmit it over multiple slots. The following main aspects were specified for this feature: 1) time-domain resource allocation (TDRA) across multiple slots, 2) TBS determination based on the multi-slot resource, and 3) RV cycling. In addition, a triggering methodology is specified in order to let the gNB enable or disable this feature for a given transport block transmission.

In NR Release 15/16, a PUSCH transport block may be allocated in time domain within one physical resource block (PRB) or slot with a maximum of 14 OFDM symbols ( $N_{symb}^{sh}$ ), and in frequency domain with a maximum of 273 PRBs $(n_{PRB})$. For a cell-edge UE, a large frequency domain allocation may not be beneficial, since the more PRBs allocated for PUSCH transmission, the smaller the power density of the signals on a given OFDM symbol is due to limited power budget (non-trivial trade-offs exist between coding gain and power gain in this context, but smaller frequency domain resource allocations, FDRA, may be preferable).

TBoMS may extend the NR Release 15/16 coverage thanks to the fact that the time-domain resources can be used instead of frequency-domain resources to transmit the same transport block. This may provide power gains in the form of larger power spectral density (PSD) and coding gain whenever additional time domain resources can be allocated (since this comes at no cost for the PSD).

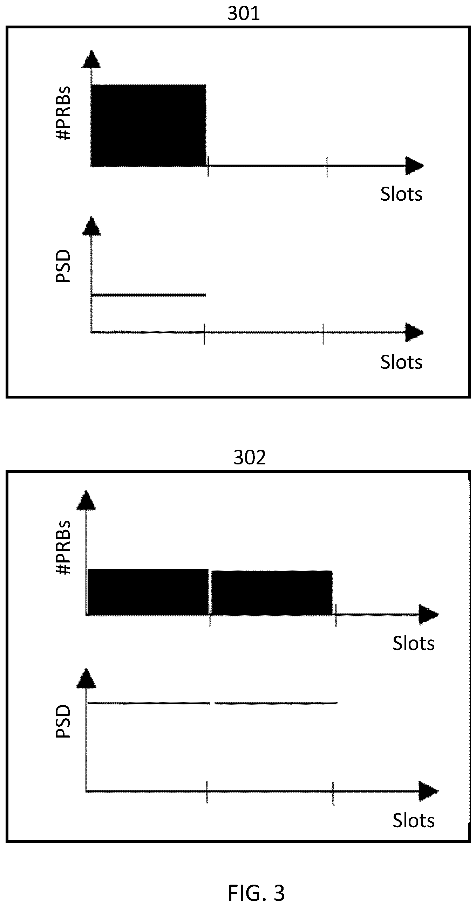

FIG. 3 illustrates an example of power spectral density and time domain transmission for legacy in block 301 and for NR Release 17 TBoMS in block 302.

Calculation of the number of information bits $N_{Info}$, for TBoMS may be based on the number of resource elements (REs) determined in the first $L$ symbols over which the TBoMS transmission is allocated, scaled by $K \geq 1$. The number of symbols $N_{symb}^{sh}$ and overhead $N_{oh}^{PRB}$ may be assumed to be the same for all the slots over which the TBoMS transmission is allocated. $L$ is the number of symbols determined using the start and length indicator value (SLIV) of PUSCH indicated via TDRA. To calculate $N_{Info}$ for TBS determination, the scaling factor value $K = N$ may be supported, where $N$ is the number of allocated slots for a single TBoMS.

$$N_{info} = N_{RE} \cdot R \cdot Q_m \cdot v$$

where:

$$N_{RE} = N * min\left(156, N_{RE}^{'}\right) \cdot n_{PRB}$$

and one layer is supported, i.e., $v = 1$, where this limitation may be removed in future releases. In the above, $N_{RE}$ denotes the total number of resource elements allocated for PUSCH, $N_{RE}'$ denotes the total number of resource elements allocated for PUSCH within a PRB (excluding reference signal and other overhead), $R$ denotes code rate, and $Q_m$ denotes modulation order. The maximum supported TBS may not exceed the legacy maximum value for one layer. Code block segmentation, code-block-specific cyclic redundancy check (CRC) addition, and code block concatenation may not be needed, since just one code block may be supported with TBoMS.

The number of allocated slots for one TB in TBoMS may be, for example, $N = 1, 2, 4$ or $8$, where the same number of PRBs per symbol may be allocated across slots for TBoMS transmission. The $N$ allocated slots for the single TBoMS may be defined as the number of slots after available slot determination for a single TBoMS transmission, before dropping rules are applied. The number of slots allocated for TBoMS may be counted based on the available slots for uplink transmission, similar to the procedure that is used for PUSCH repetition type A.

Repetitions of a single TBoMS ($M$) may be supported, for example, for up to 16 repetitions, such that the total number of allocated slots for TBoMS repetition may be $M * N (\leq 32)$.

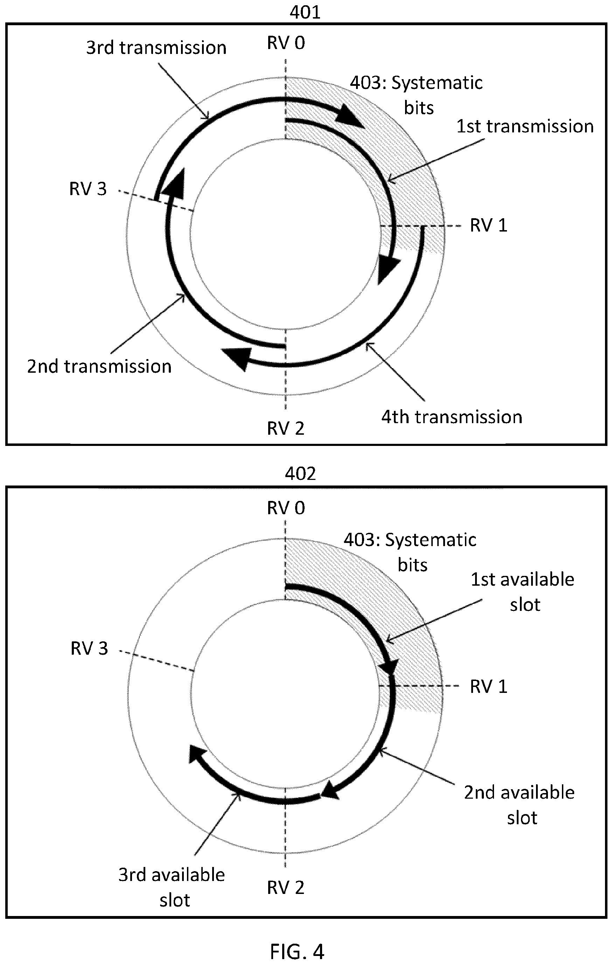

With TBoMS, bit selection and interleaving in rate matching may be done on a per-slot basis, whereas without TBoMS they may be done over a code block. FIG. 4 illustrates the usage of a UE circular buffer with and without TBoMS transmission. Block 401 of FIG. 4 illustrates ringbuffer and the usage of redundancy version (RV) without TBoMS transmission. Block 402 of FIG. 4 illustrates ringbuffer and the usage of redundancy version in TBoMS transmission. In FIG. 4, the systematic bits 403 mean information bits after puncturing (i.e., codeword bits without parity check bits).

In case of TBoMS (block 402), the UE may write the TB/codeblock to the circular buffer and use the same RV for all slots allocated to one TBoMS transmission, such that the bit mapping procedure over allocated slots for TBoMS ensures that the first bit mapped to the first available resource of the available slot $N$ is the one immediately after the last bit mapped to the last available resource of the available slot $N$-1. Different RVs may be used for repetitions of the TB in TBoMS.

NR Release 17 TBoMS may support an increase of the maximum number of repetitions (compared to NR Release 16) with repetition factors configured in a time domain resource allocation (TDRA) list with a row index indicated, for example, by the configured grant configuration or by the TDRA field in DCI. The number of slots allocated for TBoMS (*numberOfSlotsTBoMS-r17*) and number of repetitions (*numberOfRepetitions-r17*) may be determined UE-specifically by using a row index of a TDRA list, configured for example via RRC.

In NR Release 17, there was an objective to determine mechanism(s) to enable joint channel estimation over multiple PUSCH transmissions, based on the conditions to keep power consistency and phase continuity to be investigated and specified, if necessary. In addition to that, potential optimization of demodulation reference signal (DMRS) location/granularity in time domain was not precluded. Inter-slot frequency hopping with inter-slot bundling was considered to enable joint channel estimation.

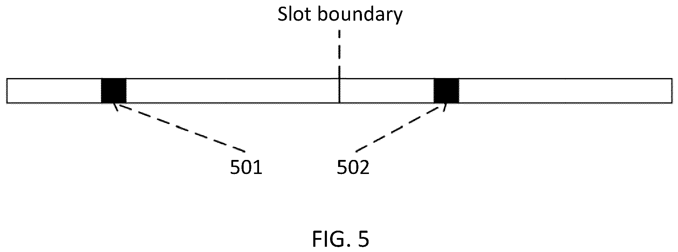

FIG. 5 illustrates joint channel estimation for PUSCH. Referring to FIG. 5, both DMRS symbols 501, 502 may be used to jointly estimate the channel for PUSCH in both slots. This feature may improve the channel estimation quality for the demodulation of PUSCH at the gNB receiver by using jointly the DMRS symbols 501, 502 across the slots from the PUSCH resources, which fulfil the requirements for power consistency and phase continuity. Currently, there is no guarantee that, for example, PUSCH resources from consecutive slots satisfy the power consistency and phase continuity requirements, but it is up to UE implementation (if the UE maintains power consistency and phase continuity during PUSCH transmissions over these slots). In NR Release 17, phase continuity and power consistency requirements were defined. No new DMRS pattern or optimization of DMRS granularity in time domain for PUSCH are considered for joint channel estimation in NR Release 17.

Uplink enhancements (e.g., coverage enhancements) have been identified as one of the potential areas for NR Release 18. UE transmission power is among the most valuable resources in uplink, and enhancements to unlock additional uplink power are highly beneficial. In NR Release 18, there is an objective to specify further uplink coverage enhancements for physical random-access channel (PRACH), power domain, and discrete Fourier transform spread orthogonal frequency division multiplexing (DFT-s-OFDM).

The objectives for power domain enhancements may include studying, and if necessary, specifying the following power domain enhancements: enhancements to realize increasing UE power high limit for carrier aggregation (CA) and dual connectivity (DC); and enhancements to reduce maximum power reduction (MPR) and/or peak-to-average ratio (PAR), including frequency domain spectrum shaping with and without spectrum extension for DFT-s-OFDM and tone reservation.

NR Release 15 supports frequency-domain spectrum shaping (FDSS) without spectrum extension for pi/2 binary phase shift keying (BPSK). The exact FDSS function is not defined in the standard, but the performance requirements are specified to define the boundary conditions for the implementation. Thus, the standard allows for vendors to do their own implementation and performance optimizations, and the system performance is attempted to be guaranteed by means of minimum requirements related to spectrum flatness, in-band/out-of-band emission, and error vector magnitude (EVM). The EVM equalizer flatness may be used for setting the UE transmitter (Tx) spectrum flatness requirements for pi/2-BPSK with spectrum shaping. The peak-to-peak variation of the EVM equalizer coefficients comprised within the frequency range of the uplink allocation is not allowed to exceed the limits defined in the specifications. However, in order to obtain coverage gains for modulation orders higher than BPSK, for example for quadrature phase shift keying (QPSK), spectrum extension may be needed. The spectrum shaping can be applied with or without spectrum extension.

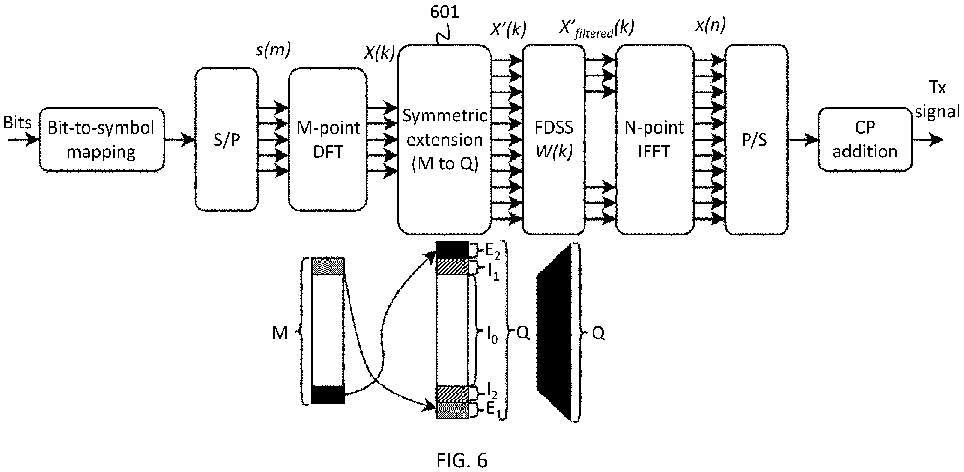

FIG. 6 illustrates a block diagram of an UL transmitter with spectrum shaping and a spectrum extension chain. If spectrum extension is not supported, then the symmetric extension block 601 may not be included. The transition band bins are weighted by the FDSS function before mapping to the inverse fast Fourier transform (IFFT) input. The FDSS with spectrum extension uses the additional symmetric extension block 601, which results in excess bands. The shaping function without spectrum extension is a tradeoff between demodulation performance and the Tx power gain, while shaping with spectrum extension is a tradeoff between spectral efficiency and Tx power gain.

The processing chain for DFT-s-OFDM comprises a discrete Fourier transform (DFT) of the $M$ input complex sub-symbols, denoted by $s(m)$ with $m \in \{0,...,M - 1\}$, that are transmitted within one DFT-s-OFDM symbol. $X(k)$ denotes the corresponding frequency-domain samples at the DFT output. Sub-symbols are referring to the group of complex modulated symbols that are part of one DFT-s-OFDM symbol.

The total allocation size, $Q$, is the number of frequency-domain resources (also referred to as subcarriers, frequency bins, or resource elements) that are used for transmission. These $Q$ resources carry the in-band - and if so noted - also the excess band transmit signal contents.

The in-band refers to the $M \leq Q$ frequency-domain resources that carry the data, and herein it is further assumed that the in-band is located in the middle of the allocation for conceptual simplicity.

The excess band, in turn, corresponds to the $E = Q - M$ frequency-domain resources that are obtained after symmetric extension of the in-band, where $Q$ denotes the total allocated frequency-domain resources (in-band and out-band), and $M$ denotes the data resources/REs. Herein it is further assumed that $E/2$ frequency-domain resources are allocated at one side of the in-band, and the other $E/2$ resources are allocated at the other side. With a fixed total allocation size Q, the extension in percentage may be defined as $(1 - M/Q) \times 100$. For notational simplicity, herein the total allocation bins are indexed as $k = 0,...,Q - 1$, while noting that the exact true IFFT bins depend on the location of the total allocation within the channel bandwidth.

In FIG. 6, $E_1$ denotes excess band in the lower side of the spectrum allocation. $I_2$ denotes in-band in the lower side of the allocation ($E_2$ contains copies of the REs of $I_2$). $I_0$ denotes in-band in the middle of the allocation. $I_1$ denotes in-band in the higher side of the allocation ($E_1$ contains copies of the REs of $I_1$). $E_2$ denotes excess band in the higher side of the spectrum allocation.

The symmetric spectral extension 601 may be performed between the DFT and the IFFT stages, yielding $Q$ subcarriers, where $Q = M + E$ is the size of the total resource allocation, and $E$ is the total excess band in subcarriers. To this end, the symmetrical spectrally extended version of the DFT output may be expressed as:

$$X'(k) = X\left(\left(k + M - \frac{E}{2}\right), \mod M\right)$$

for $k = 0, ... , Q - 1$, where mod $M$ represents the modulo operation with respect to $M$. The symmetric spectral extension may be performed by copying $E/2$ subcarriers from one side of the DFT output and placing them on the other side. This operation may be done for both sides of the DFT output. It is noted that in the special case of $E = 0$ (i.e., without spectrum extension), $Q = M$ and $X'(k) = X(k)$ for $k = 0,..., Q - 1$.

The other key ingredient is to shape the transmit signal spectrum such that the effective filtered pulse-shape, denoted by g'(.), yields reduced peak-to-average-power ratio (PAPR) compared to the basic DFT-s-OFDM pulse-shape g(.). A computationally efficient way to achieve this is by means of an element-wise multiplication between the (symmetrically extended version of the) DFT output and a frequency-domain window $W(k)$. The filtered signal may thus be formally defined as:

$$X'_{filtered}(k) = X'(k)W(k)$$

for $k \in \{0, ... , Q - 1\}$.

$x(n)$ denotes the corresponding discrete-time sequence, where $n \in \{0,1,...,N - 1\}$ is the time-domain sample index within one DFT-s-OFDM symbol

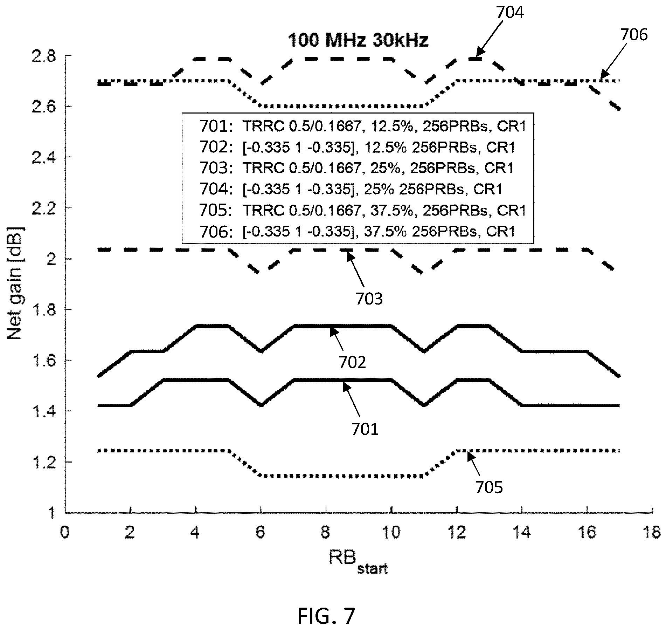

FIG. 7 illustrates the achievable net (coverage) gain of the transmission of DFT-s-OFDM with frequency-domain spectrum shaping with spectrum extension (FDSS-SE) over legacy DFT-s-OFDM for QPSK for a 256 PRB transmission for 100 MHz channel bandwidth with 30 kHz subcarrier spacing (SCS), for different spectrum extension factors and two different frequency windows. In FIG. 7, the curves 701, 702, 703, 704, 705, 706 illustrate use of different spectrum extension factors and/or filters. FIG. 7 is based on a simulation setting using 100 MHz channel bandwidth and 30KHz SCS, where the maximum number of PRBs is 273 and the allocated PRBs is 256. FIG. 7 shows the net coverage gain by sliding the transmission of 256 PRB FDSS-SE within the 273 available PRBs (i.e., 273-256=17 possible starting positions

$RB_{start}=\{1,2,3...17\}$). $RB_{start}$ denotes the index of the first PRB transmission for FDSS-SE.

From FIG. 7, it can be seen that the FDSS-SE technique may provide almost 3 dB of coverage gain. It should be noted that FIG. 7 is considering the extra power available for transmission, and the link performance of the different cases (e.g., legacy and FDSS-SE) with the same spectral efficiency. This means that when spectrum extension is used, the coding rate is increased to compensate for the extra frequency allocation.

Additional coverage gain may be achieved by combining coverage enhancement techniques (e.g., time domain enhancements such as PUSCH repetitions and TBoMS) and FDSS.

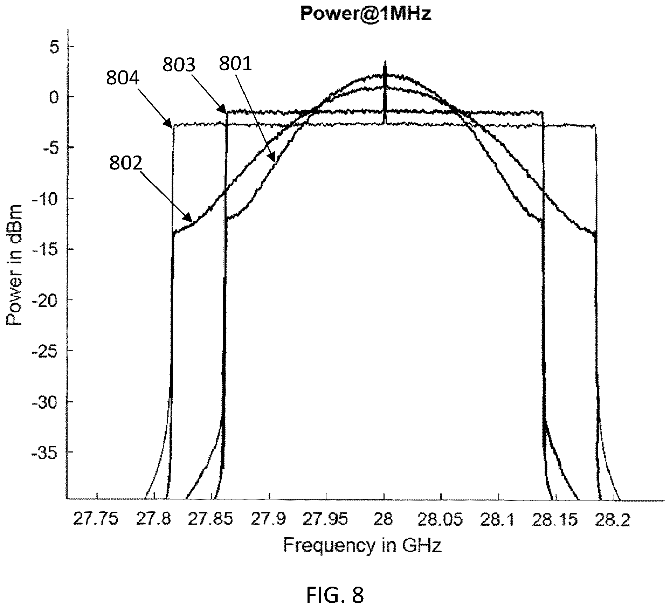

Large frequency domain allocations may not be beneficial for coverage-limited UEs. A time domain solution, such as TBoMS, may exploit the transmission of smaller bandwidth with higher spectral density over several slots to increase the signal-to-noise ratio (SNR) in the receiver, and thus increase the coverage. The coverage may be further extended by combining this technique with a power domain technique. For example, by using FDSS-SE, the power spectral density of the in-band may be higher than without FDSS (see FIG. 8).

FIG. 8 illustrates a power spectral density (PSD) comparison of legacy transmissions and FDSS-SE transmissions. In FIG. 8, the graph 801 depicts power at 1 MHz 192 PRB transmission, with FDSS with 25% extension. The graph 802 depicts power at 1 MHz 256 PRB transmission, with FDSS with 25 % extension. The graph 803 depicts power at 1 MHz 192 PRB legacy transmission (with 0 % extension). The graph 804 depicts power at 1 MHz 256 PRB legacy transmission (with 0 % extension).

Some example embodiments are described below using principles and terminology of 5G technology without limiting the example embodiments to 5G communication systems, however.

Some example embodiments provide a method to allow the combination of time-domain techniques (e.g., TBoMS and/or PUSCH repetition) and power-domain techniques (e.g., FDSS-SE) in order to increase coverage in the uplink.

Some example embodiments may comprise techniques for gNB to indicate and for UE to determine the amount of spectrum extension (i.e., excess band) used for the repetitions, or the transmissions over multiple slots.

The network (e.g., gNB) may configure (e.g., via RRC) a common excess band configuration (*commonExcessBandConfig*), when FDSS-SE is used. When transmission over multiple slots is configured, the network (e.g., gNB) may adjust or adapt the common excess band configuration based on a given transmission or transmission type. Herein the term "band" refers to a frequency band.

The *commonExcessBandConfig* may indicate a part of the information for determining the excess band to be applied at the UE. The UE may use the *commonExcessBandConfig* together with complementary information (*configuredGrantExcessBandConfig* in CG type 1, or *TDRAExcessBand* in DG and CG type 2) for determining the excess band to be applied at the UE. The excess band may also be referred to as excess bandwidth.

The use of the *commonExcessBandConfig* may reduce the required number of bits in DCI in case of CG type 2 and DG with fast adaptation by transmitting the *commonExcessBandConfig* in higher layer signaling (e.g., RRC). For example, the *commonExcessBandConfig* may be configured for a group of UEs at cell edge, and then UE-specific fine-tuning may be transmitted as complementary information in *configuredGrantExcessBandConfig* or *TDRAExcessBand*. The *commonExcessBandConfig* may be used as a default excess band, if no complementary information is received. Alternatively, or additionally, the *commonExcessBandConfig* may be used to maintain a minimum or maximum excess band in all transmissions of a given UE.

In case of configured grant (CG) type 1, the network (e.g., gNB) may provide excess band in a semi-static configuration (*configuredGrantExcessBandConfig*), when FDSS-SE is used for CG PUSCH.

In case of dynamic grant (DG) or CG type 2, a new column in the TDRA table may be provided, wherein this column indicates a complementary excess band for TBoMS/PUSCH repetition (*TDRAExcessBand*). The column may be indicated, for example, by a row index of the TDRA table.

A rule may be specified for determining the final excess band to be applied at the UE for the TBoMS/PUSCH transmission.

Alternatively, if *commonExcessBandConfig* is not configured, then TBoMS/PUSCH transmission may not use FDSS-SE.

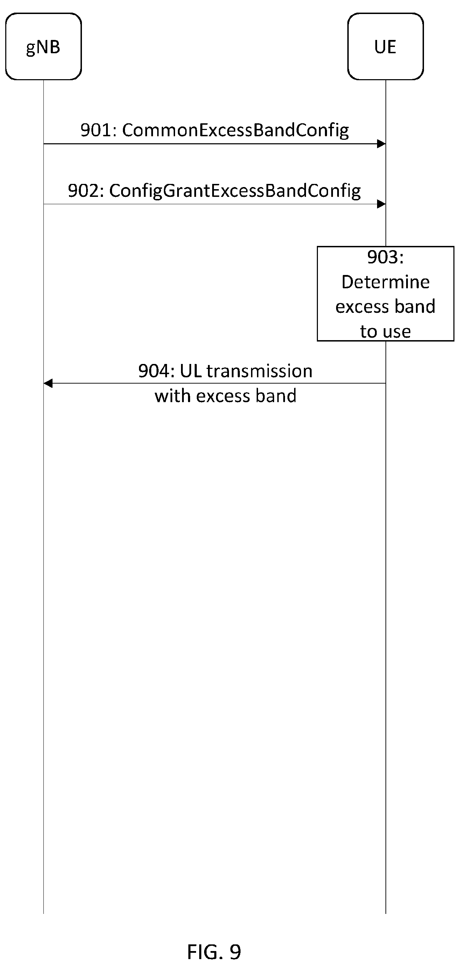

FIG. 9 illustrates a signaling diagram according to an example embodiment for CG type 1 signaling to configure excess band with TBoMS/PUSCH repetition. In this example embodiment, the network provides excess bandwidth in a semi-static configuration (*configuredGrantExcessBandConfig*), when FDSS-SE is used.

This example embodiment may allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example signal-to-interference-plus-noise ratio (SINR), for improved coverage by controlling the tradeoff between coding gain (from TBoMS or PUSCH repetition) and power gain (from FDSS-SE).

Referring to FIG. 9, in block 901, a network element (e.g., a gNB) configures a common excess band configuration (*commonExcessBandConfig*) to a UE for FDSS-SE transmissions, when FDSS-SE is used by the UE. For example, the network element may configure the common excess band configuration to the UE via RRC signaling. The *commonExcessBandConfig* may also be referred to as first information indicating a first excess band.

In block 902, in case of CG type 1, the network element provides an excess band semi-static configuration (*configuredGrantExcessBandConfig*) to the UE to adjust/adapt the common excess band configuration, when FDSS-SE is used for CG PUSCH by the UE. In other words, a semi-static configuration of spectrum extension may be applied for CG type 1. The *configuredGrantExcessBandConfig* may also be referred to as second information indicating a second excess band. In this example embodiment, the second information is for configured grant type 1.

In block 903, the UE determines, based on the first excess band and the second excess band, a third excess band to be applied at the UE for one or more multi-slot uplink transmissions (e.g., PUSCH repetition transmission and/or TBoMS transmission). The UE may determine the third excess band according to one or more rules. Some examples of such rules for determining the third excess band are presented in the following, but it should be noted that other logic may be applied as well.

As an example, the third excess band to be applied may be determined as the smallest excess band among the first excess band and the second excess band indicated by the *commonExcessBandConfig* and the *configuredGrantExcessBandConfig*, i.e., third excess band = min(first excess band, second excess band).

As another example, the third excess band to be applied may be determined as the largest excess band among the first excess band and the second excess band indicated by the *commonExcessBandConfig* and the *configuredGrantExcessBandConfig*, i.e., third excess band = max(first excess band, second excess band).

As another example, the third excess band to be applied may be determined as the second excess band indicated by the *configuredGrantExcessBandConfig*, i.e., third excess band = second excess band.

As another example, the third excess band to be applied may be determined as the first excess band indicated by the *commonExcessBandConfig* subtracted by the second excess band indicated by the *configuredGrantExcessBandConfig*, i.e., third excess band = first excess band - second excess band.

In block 904, the UE transmits one or more multi-slot uplink transmissions (e.g., PUSCH repetition transmission and/or TBoMS transmission) over multiple slots using the determined third excess band, i.e., with spectrum extension. The determined third excess band may be applied for all repetitions. The network element receives the one or more multi-slot uplink transmissions.

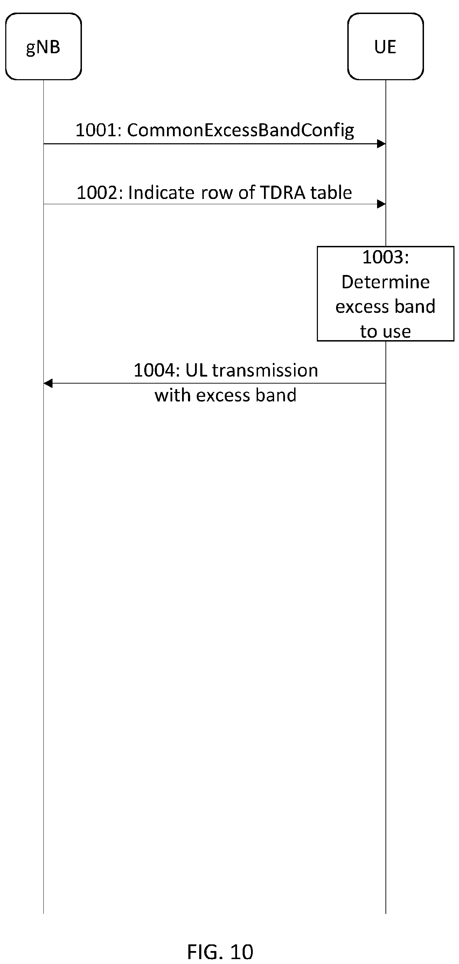

FIG. 10 illustrates a signaling diagram according to an example embodiment for DG or CG type 2. In this example embodiment, a new column in the TDRA table indicating a complementary excess band for TBoMS/PUSCH repetition (*TDRAExcessBand*) may be indicated, for example, by the row index of the TDRA table.

This example embodiment may allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example SINR, for improved coverage by controlling the tradeoff between coding gain (from TBoMS or PUSCH repetition) and power gain (from FDSS-SE).

Referring to FIG. 10, in block 1001, a network element (e.g., a gNB) configures a common excess band configuration (*commonExcessBandConfig*) to a UE for FDSS-SE transmissions, when FDSS-SE is used by the UE. For example, the network element may configure the common excess band configuration to the UE via RRC signaling. The *commonExcessBandConfig* may also be referred to as first information indicating a first excess band.

In block 1002, in case of DG or CG type 2, the network element transmits an indication, for example a row index indication, to the UE, wherein the indication indicates a column in the TDRA table that indicates a complementary excess band for TBoMS/PUSCH repetition (*TDRAExcessBand*). In other words, the network element indicates, to the UE, a row of a time-domain resource allocation table for configured grant type 2 or for a dynamic grant, wherein the row comprises at least one column, wherein the at least one column comprises at least one of the following: second information or a second excess band or a third excess band. Herein the second information may refer to information indicating the second excess band. Thus, a dynamic configuration of spectrum extension may be applied for DG and CG type 2 for example with a row index indication of the TDRA table.

As another example, at least one row of the time-domain resource allocation table may comprise at least one of the following: the second information or the second excess band or the third excess band.

As another example, at least one row of the time-domain resource allocation table may be used to determine at the least one of the following: the second information or the second excess band or the third excess band.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In block 1003, the UE determines, based on the first excess band and the second excess band, the third excess band to be applied for one or more multi-slot uplink transmissions (e.g., PUSCH repetition transmission and/or TBoMS transmission). The UE may determine the third excess band according to one or more rules. Some examples of such rules for determining the third excess band are presented in the following, but it should be noted that other logic may be applied as well.

As an example, the third excess band to be applied may be determined as the smallest excess band among the first excess band and the second excess band indicated by the *commonExcessBandConfig* and the *TDRAExcessBand,* i.e., third excess band = min(first excess band, second excess band).

As another example, the third excess band to be applied may be determined as the largest excess band among the first excess band and the second excess band indicated by the *commonExcessBandConfig* and the *TDRAExcessBand,* i.e., third excess band = max(first excess band, second excess band).

As another example, the third excess band to be applied may be determined as the second excess band indicated by the *TDRAExcessBand,* i.e., third excess band = second excess band.

As another example, the third excess band to be applied may be determined as the first excess band indicated by the *commonExcessBandConfig* subtracted by the second excess band indicated by the *TDRAExcessBand,* i.e., third excess band = first excess band - second excess band.

In block 1004, the UE transmits one or more multi-slot uplink transmissions (e.g., PUSCH repetition transmission and/or TBoMS transmission) over multiple slots using the determined third excess band, i.e., with spectrum extension. The determined third excess band may be applied for all repetitions. The network element receives the one or more multi-slot uplink transmissions.

Whether FDSS-SE is applied for the uplink transmission or not may be determined as follows. If the new column in the TDRA table indicates a complementary excess band (e.g., *TDRAExcessBand*) that is greater than zero, then FDSS-SE may be applied and one of the above examples may be used for determining the excess band to be applied for the uplink transmission.

Otherwise, if the column in the TDRA table indicates a complementary excess band (e.g., *TDRAExcessBand*) that is equal to zero, then FDSS-SE may not be applied for the uplink transmission.

Alternatively, or additionally, a separate parameter (e.g., *adaptiveFDSS-SEonPUSCHactivation)* may be introduced for indicating whether the above rule(s) should be applied or not. For example, this separate parameter may be conveyed via higher layer signaling, such as RRC or MAC control element (MAC CE). In case this separate parameter indicates to apply the rule(s), then the UE may determine the excess band based on the rule(s) as described above for block 1003. In case the separate parameter indicates that the rule(s) are not applied, then FDSS-SE may be used for all PUSCH/TBoMS transmissions using the *commonExcessBandConfig,* if it is configured. Otherwise, if *commonExcessBandConfig* is not configured, then FDSS-SE is not used for any PUSCH/TBoMS transmission.

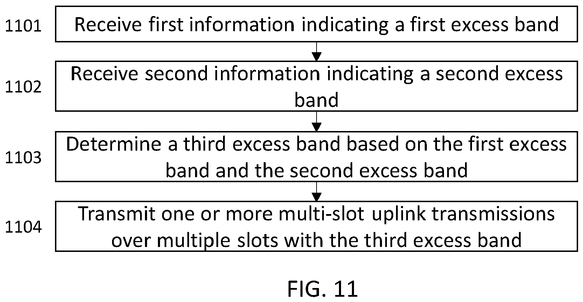

FIG. 11 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

This example embodiment may allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example SINR, for improved coverage by controlling the tradeoff between coding gain (from TBoMS or PUSCH repetition) and power gain (from FDSS-SE).

Referring to FIG. 11, in block 1101, first information indicating a first excess band is received.

In block 1102, second information indicating a second excess band is received.

In block 1103, a third excess band for one or more multi-slot uplink transmissions is determined, wherein the third excess band is determined based on the first excess band and the second excess band.

In block 1104, the one or more multi-slot uplink transmissions are transmitted over multiple slots with the third excess band.

For example, the one or more multi-slot uplink transmissions may be transmitted by using the third excess band for frequency-domain spectrum shaping with spectrum extension (FDSS-SE), and the one or more multi-slot uplink transmissions may comprise at least one of: a transport block over multiple slots, TBoMS, or physical uplink shared channel (PUSCH) repetitions.

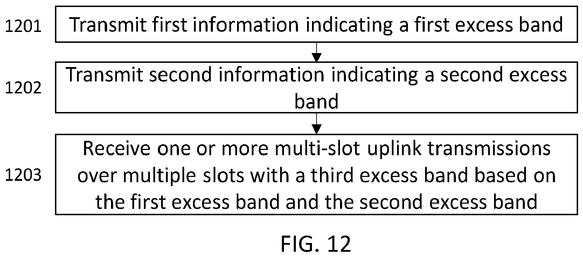

FIG. 12 illustrates a flow chart according to an example embodiment of a method performed by an apparatus. For example, the apparatus may be, or comprise, or be comprised in, a network element of a radio access network. The network element may correspond to the access node 104 of FIG. 1.

This example embodiment may allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example SINR, for improved coverage by controlling the tradeoff between coding gain (from TBoMS or PUSCH repetition) and power gain (from FDSS-SE).

Referring to FIG. 12, in block 1201, first information indicating a first excess band is transmitted.

In block 1202, second information indicating a second excess band is transmitted.

In block 1203, one or more multi-slot uplink transmissions are received over multiple slots with a third excess band, wherein the third excess band is based on the first excess band and the second excess band.

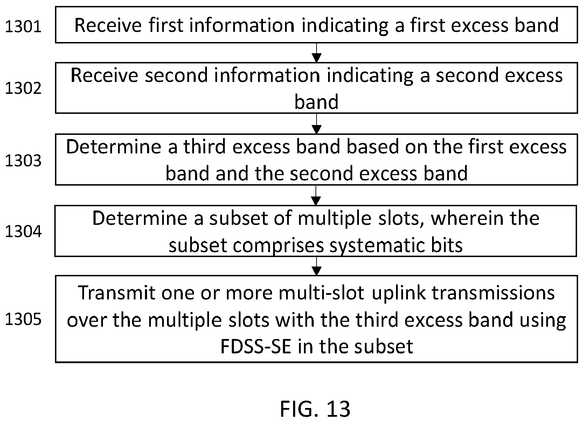

FIG. 13 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

In this example embodiment, the apparatus (e.g., UE) may use FDSS-SE for the slots comprising systematic bits (see FIG. 4). This may increase the protection of the systematic bits by means of additional output power, and thus improve the reception performance. In this configuration, the excess band used for FDSS-SE after implementing the previously defined rules may be used exclusively for slots comprising systematic bits.

Referring to FIG. 13, in block 1301, first information indicating a first excess band is received.

In block 1302, second information indicating a second excess band is received.

In block 1303, a third excess band for one or more multi-slot uplink transmissions is determined, wherein the third excess band is determined based on the first excess band and the second excess band.

in block 1304, a subset of multiple slots is determined, wherein the subset comprises systematic bits.

In block 1305, the one or more multi-slot uplink transmissions are transmitted over the multiple slots using FDSS-SE in the subset, wherein the third excess band is used for the FDSS-SE in the subset.

In other words, the apparatus may determine whether a slot of the multiple slots comprises systematic bits, and, based on determining that the slot comprises systematic bits, use FDSS-SE in the slot.

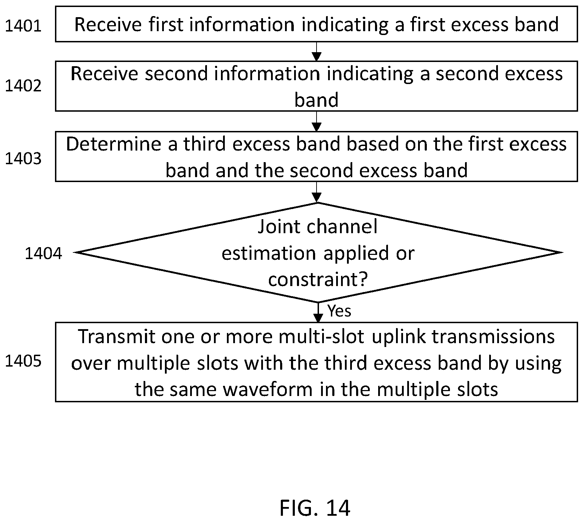

FIG. 14 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

In this example embodiment, whenever demodulation reference signal (DMRS) bundling for joint channel estimation is used, the related UL transmission occasions may be forced to use the same waveform and FDSS with or without spectrum extension, since the used filter coefficients in FDSS are jointly estimated with the channel and not known for the receiver. In other words, the related UL transmission occasions may be forced to transmit the same waveform (e.g., legacy DFT-s-OFDM, or DFT-s-OFDM with FDSS-SE) to allow for joint channel estimation and DMRS bundling, and the UE may not be able to change the waveform across PUSCH repetitions or TBoMS slots, due to implementation constraints.

The UL transmission occasions may or may not be back-to-back. For example, in PUSCH repetition type B, the transmissions/repetitions may be back-to-back.

On the other hand, in PUSCH repetition type A, the transmissions/repetitions may not be back-to-back, since there may be silent periods (symbols) for the UE (e.g., UL transmissions by others). In case DMRS bundling is applied over X slots, then the slot N to slot N+X should have the same waveform and FDSS-SE to allow joint channel estimation.

There may also be other cases, where the UE will use the same waveform and FDSS-SE. For example, the UE may have an implementation constraint, which means that there is not enough time for UE software and/or hardware to switch to another waveform and/or FDSS-SE configuration. This could be an issue for example with large SCS, i.e., short slot period.

This example embodiment may allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example SINR, for improved coverage by controlling the tradeoff between coding gain (from TBoMS or PUSCH repetition) and power gain (from FDSS-SE).

Referring to FIG. 14, in block 1401, first information indicating a first excess band is received.

In block 1402, second information indicating a second excess band is received.

In block 1403, a third excess band for one or more multi-slot uplink transmissions is determined, wherein the third excess band is determined based on the first excess band and the second excess band.

In block 1404, the apparatus determines whether joint channel estimation is applied over the multiple slots, and/or whether the apparatus has a constraint associated with using different waveforms in the multiple slots, over which the one or more multi-slot uplink transmissions are to be transmitted. The constraint may refer to, for example, the implementation constraint described above, or some other constraint.

In block 1405, based on determining that the joint channel estimation is applied over the multiple slots and/or that the apparatus has the constraint (block 1404: yes), the one or more multi-slot uplink transmissions are transmitted over the multiple slots with the third excess band by transmitting a same waveform in the multiple slots. As an example, the waveform may be DFT-s-OFDM with FDSS-SE. Otherwise, if joint channel estimation is not applied and/or there is no constraint, then two or more different waveforms may be used in the multiple slots.

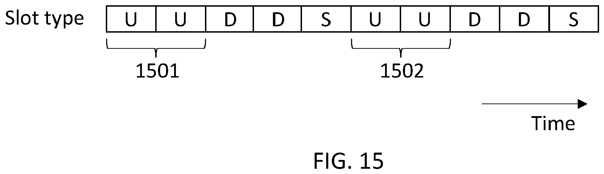

FIG. 15 illustrates an example of time-division duplexing (TDD) slots divided for uplink and downlink transmission. In this configuration, two back-to-back uplink transmissions 1501, 1502 are used for TBoMS/PUSCH repetition. In FIG. 15, "U" denotes an uplink slot, "D" denotes a downlink slot, and "S" denotes a special slot. Following the previous logic, if the first slot of back-to-back transmission 1501 has systematic bits and is transmitted with FDSS-SE, then the following slots may be transmitted with FDSS-SE as well.

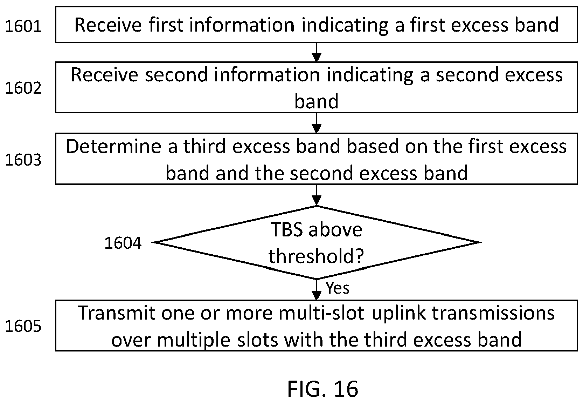

FIG. 16 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

In this example embodiment, the UE may combine FDSS-SE and TBoMS in case of TBS larger than the threshold above which code block (CB) segmentation occurs. FDSS-SE may be forced to be the "default", when there is CB segmentation. For a large code block size (or a large transport block size) above a certain threshold depending on low-density parity-check code (LDPC) base graph, the code block (or the transport block) may be divided into smaller pieces and a CRC may be attached to a given piece. The pieces may be passed through channel coding and these outputs may be concatenated.

This example embodiment may allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example SINR, for improved coverage by controlling the tradeoff between coding gain (from TBoMS or PUSCH repetition) and power gain (from FDSS-SE).

Referring to FIG. 16, in block 1601, first information indicating a first excess band is received.

In block 1602, second information indicating a second excess band is received.

In block 1603, a third excess band for one or more multi-slot uplink transmissions is determined, wherein the third excess band is determined based on the first excess band and the second excess band.

In block 1604, the apparatus determines whether a transport block size (TBS) of the transport block to be transmitted is larger than a threshold above which code block segmentation occurs.

In block 1605, based on determining that the TBS is larger than the threshold (block 1604: yes), the one or more multi-slot uplink transmissions are transmitted over multiple slots with the third excess band using FDSS-SE for TBoMS. In other words, the one or more multi-slot uplink transmissions are transmitted by using the third excess band for FDSS-SE, and the one or more multi-slot uplink transmissions comprise a TBoMS transmission.

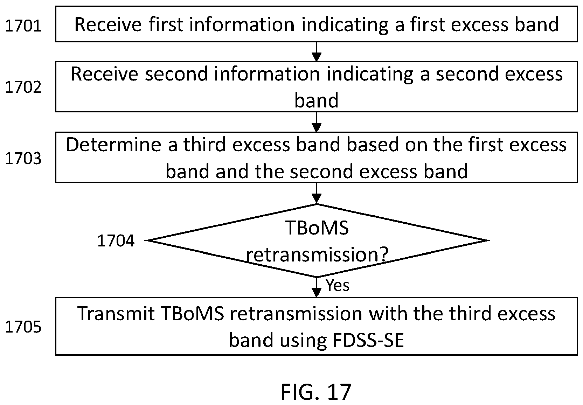

FIG. 17 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

In this example embodiment, the UE may use FDSS-SE for TBoMS in case of TBoMS retransmission, while keeping the other scheduling parameters constant (to increase the success probability of the TBoMS retransmission and to provide higher protection for the TBoMS retransmission). The other scheduling parameters refer to the configuration parameters used in the previous TBoMS transmission without FDSS, such as the number of slots allocated for TBoMS (numberOfSlotsTBoMS-r17) and number of repetitions (numberOfRepetitions-r17), PUSCH allocation details, etc. In this case, PUSCH retransmissions may be scheduled with a different starting RV, in turn providing additional protection (in the form of larger PSD) to systematic bits, if needed, during the retransmission. Another parameter may indicate that in case of retransmission, FDSS-SE is used, with the excess band computed following the rule(s) described above.

Referring to FIG. 17, in block 1701, first information indicating a first excess band is received.

In block 1702, second information indicating a second excess band is received.

In block 1703, a third excess band for one or more multi-slot uplink transmissions is determined, wherein the third excess band is determined based on the first excess band and the second excess band.

In block 1704, the apparatus determines whether the one or more multi-slot uplink transmissions comprise a TBoMS retransmission.

In block 1705, based on determining that the one or more multi-slot uplink transmissions comprise the TBoMS retransmission (block 1704: yes), the TBoMS retransmission is transmitted over multiple slots with the third excess band using FDSS-SE in the TBoMS retransmission.

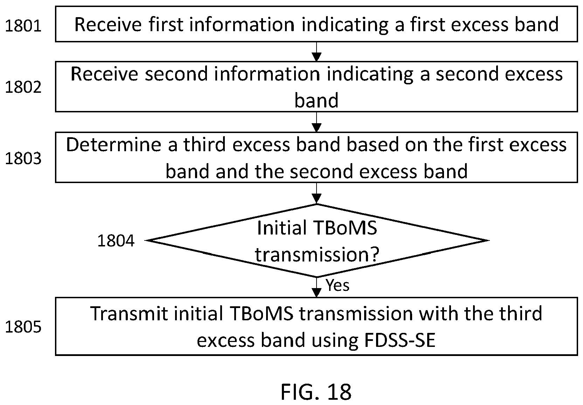

FIG. 18 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

In this example embodiment, the UE may use FDSS-SE for initial TBoMS transmission to increase (compared to without FDSS-SE) the number of PRBs allocated to both in-band and excess band to TBoMS and reduce code rate. This example embodiment may provide higher protection for the initial TBoMS transmission. Furthermore, the link budget may be improved in terms of coding rate and throughput would be the same as before, since more PRBs are used to compensate the lower modulation coding scheme (MCS). Thus, the FDSS-SE power gain may be transformed into a TBoMS coding gain. The idea is that a larger allocation can be used (both in-band and excess band) with regard to legacy. The introduction of FDSS-SE may allow higher output power. Since the bandwidth is larger, a lower coding rate (than legacy) can be used to transmit the same number of information bits ($N_{Info}$).

Referring to FIG. 18, in block 1801, first information indicating a first excess band is received.

In block 1802, second information indicating a second excess band is received.

In block 1803, a third excess band for one or more multi-slot uplink transmissions is determined, wherein the third excess band is determined based on the first excess band and the second excess band.

In block 1804, the apparatus determines whether the one or more multi-slot uplink transmissions comprise an initial TBoMS transmission.

In block 1805, based on determining that the one or more multi-slot uplink transmissions comprise the initial TBoMS transmission (block 1804: yes), the initial TBoMS transmission is transmitted over multiple slots with the third excess band using FDSS-SE in the initial TBoMS transmission.

In another example embodiment, the UE may use FDSS-SE for TBoMS for the initial transmission with a same total number of PRBs (in-band and out-band) as used without FDSS-SE. In this case, the bandwidth occupied by in-band and out-band PRBs used for TBoMS with FDSS-SE may be equal to the bandwidth occupied by legacy TBoMS without FDSS-SE. This example embodiment may provide higher transmission PSD for TBoMS with FDSS-SE, but $N_{Info}$ (throughput) may be reduced compared to legacy TBoMS without FDSS-SE, or kept the same by using a larger modulation order and/or higher coding rate in TBoMS with FDSS-SE. This example embodiment may improve the coverage by power gain (instead of coding gain).

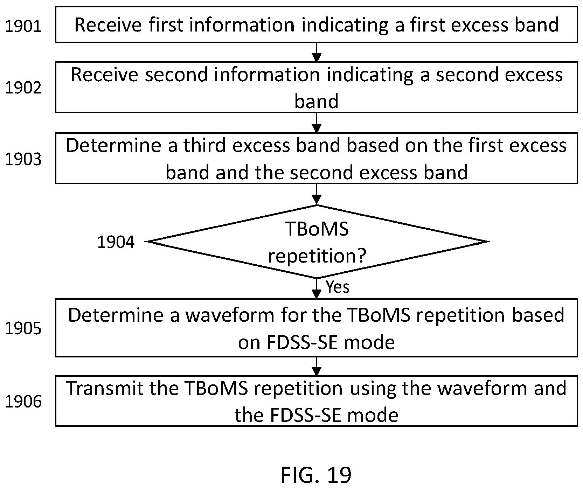

FIG. 19 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

In this example embodiment, the UE may use FDSS-SE to distinguish between TBoMS repetitions with different waveforms. Uplink transmissions of a single TBoMS repetition may use the same waveform and the same FDSS-SE mode, where the FDSS-SE mode is either using FDSS-SE or not using FDSS-SE. For example, the uplink transmission of a single TBoMS repetition may use one of the following operational modes: 1) DFT-s-OFDM with FDSS-SE, 2) DFT-s-OFDM without FDSS-SE, or 3) cyclic prefix OFDM (CP-OFDM) without FDSS-SE.

A subsequent TBoMS repetition may use a different waveform and a different FDSS-SE mode compared to a previous TBoMS repetition, but a waveform and a FDSS-SE mode cannot change within a single TBoMS repetition. For example, uplink transmissions of a first TBoMS repetition can use a first operational mode 1..3, uplink transmissions of a second TBoMS repetition can use a second operational mode 1..3, wherein the first operational mode and the second operational mode may be the same or different.

As an example, FDSS-SE may be used by default in TBoMS with DFT-s-OFDM, and the deactivation of FDSS-SE may implicitly indicate a dynamic switching to CP-OFDM in the subsequent transmissions (and vice versa).

This example embodiment may allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example SINR, for improved coverage by controlling the tradeoff between coding gain (from TBoMS or PUSCH repetition) and power gain (from FDSS-SE).

Referring to FIG. 19, in block 1901, first information indicating a first excess band is received.

In block 1902, second information indicating a second excess band is received.

In block 1903, a third excess band for one or more multi-slot uplink transmissions is determined, wherein the third excess band is determined based on the first excess band and the second excess band.

In block 1904, the apparatus determines whether the one or more multi-slot uplink transmissions comprise a TBoMS repetition.

In block 1905, based on determining that the one or more multi-slot uplink transmissions comprise the TBoMS repetition (block 1904: yes), the apparatus determines, based on an FDSS-SE mode of the apparatus, a waveform for the TBoMS repetition, wherein the FDSS-SE mode indicates whether to use FDSS-SE. For example, if the FDSS-SE mode indicates to use FDSS-SE, then the apparatus may determine that DFT-s-OFDM is to be used as the waveform. As another example, if the FDSS-SE mode indicates to not use FDSS-SE, then the apparatus may determine that CP-OFDM is to be used as the waveform.

In block 1906, the TBoMS repetition is transmitted using the determined waveform and the FDSS-SE mode. For example, if the FDSS-SE mode indicates to use FDSS-SE, and the determined waveform is DFT-s-OFDM, then the TBoMS repetition is transmitted over multiple slots with the third excess band using FDSS-SE and DFT-s-OFDM.

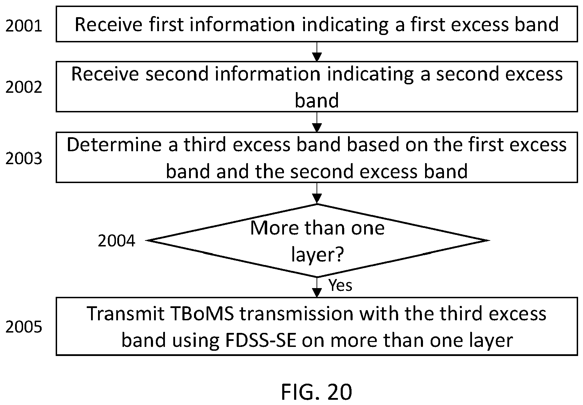

FIG. 20 illustrates a flow chart according to an example embodiment of a method performed by an apparatus. For example, the apparatus may be, or comprise, or be comprised in, a user device. The user device may also be called a subscriber unit, mobile station, remote terminal, access terminal, user terminal, terminal device, or user equipment (UE). The user device may correspond to one of the user devices 100, 102 of FIG. 1.

In this example embodiment, the UE may combine FDSS-SE and TBoMS for transmission of more than one layer. Additional layers may need better link budget to be supported and FDSS-SE would provide it, on top of TBoMS. Herein a layer may mean a MIMO layer for spatial multiplexing. More than one MIMO layer may be used to increase throughput when channel rank is greater than or equal to 2.

This example embodiment may also allow the combination of time-domain techniques (e.g., TBoMS and/or PUSCH repetition) and power-domain techniques (e.g., FDSS-SE) in order to increase coverage in the uplink. Moreover, this example embodiment may provide higher adaptation flexibility according to channel conditions, for example SINR, for improved coverage by controlling the tradeoff between coding gain (from TBoMS or PUSCH repetition) and power gain (from FDSS-SE).

Referring to FIG. 20, in block 2001, first information indicating a first excess band is received.

In block 2002, second information indicating a second excess band is received.

In block 2003, a third excess band for one or more multi-slot uplink transmissions is determined, wherein the third excess band is determined based on the first excess band and the second excess band.

In block 2004, the apparatus determines whether the one or more multi-slot uplink transmissions comprise a TBoMS transmission on more than one layer.

In block 2005, based on determining that the one or more multi-slot uplink transmissions comprise the TBoMS transmission on the more than one layer (block 2004: yes), the TBoMS transmission is transmitted over multiple slots with the third excess band using FDSS-SE in the TBoMS transmission on the more than one layer.

The blocks, related functions, and information exchanges (messages) described above by means of FIGS. 11-14 and 16-20 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Some example embodiments may increase coverage in the uplink. Furthermore, some example embodiments may provide higher protection for systematic bits, which may result in improved reception performance. Moreover, some example embodiments may provide higher adaptation flexibility according to channel conditions, for example SINR, for improved coverage by controlling the tradeoff between coding gain (from TBoMS or PUSCH repetition) and power gain (from FDSS-SE).

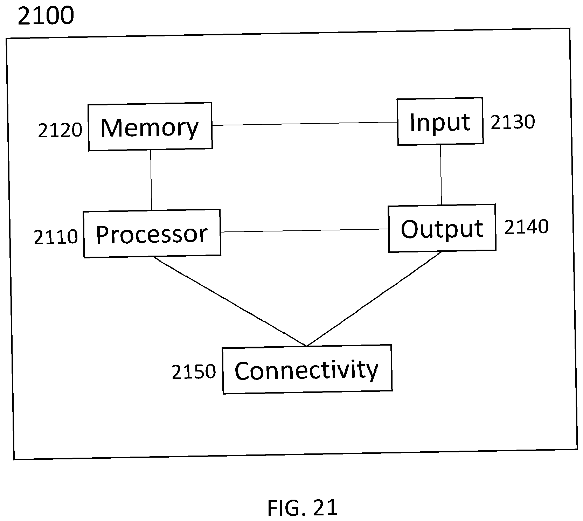

FIG. 21 illustrates an example of an apparatus 2100 comprising means for performing one or more of the example embodiments described above. For example, the apparatus 2100 may be an apparatus such as, or comprising, or comprised in, a user device. The user device may correspond to one of the user devices 100, 102 of FIG. 1. The user device may also be called a subscriber unit, mobile station, remote terminal, access terminal, user terminal, terminal device, or user equipment (UE).

The apparatus 2100 may comprise a circuitry or a chipset applicable for realizing one or more of the example embodiments described above. For example, the apparatus 2100 may comprise at least one processor 2110. The at least one processor 2110 interprets instructions (e.g., computer program instructions) and processes data. The at least one processor 2110 may comprise one or more programmable processors. The at least one processor 2110 may comprise programmable hardware with embedded firmware and may, alternatively or additionally, comprise one or more application-specific integrated circuits (ASICs).

The at least one processor 2110 is coupled to at least one memory 2120. The at least one processor is configured to read and write data to and from the at least one memory 2120. The at least one memory 2120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 2120 stores computer readable instructions that are executed by the at least one processor 2110 to perform one or more of the example embodiments described above. For example, non-volatile memory stores the computer readable instructions, and the at least one processor 2110 executes the instructions using volatile memory for temporary storage of data and/or instructions. The computer readable instructions may refer to computer program code.

The computer readable instructions may have been pre-stored to the at least one memory 2120 or, alternatively or additionally, they may be received, by the apparatus, via an electromagnetic carrier signal and/or may be copied from a physical entity such as a computer program product. Execution of the computer readable instructions by the at least one processor 2110 causes the apparatus 2100 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 2100 may further comprise, or be connected to, an input unit 2130. The input unit 2130 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 2130 may comprise an interface to which external devices may connect to.

The apparatus 2100 may also comprise an output unit 2140. The output unit may comprise or be connected to one or more displays capable of rendering visual content, such as a light emitting diode (LED) display, a liquid crystal display (LCD) and/or a liquid crystal on silicon (LCoS) display. The output unit 2140 may further comprise one or more audio outputs. The one or more audio outputs may be for example loudspeakers.

The apparatus 2100 further comprises a connectivity unit 2150. The connectivity unit 2150 enables wireless connectivity to one or more external devices. The connectivity unit 2150 comprises at least one transmitter and at least one receiver that may be integrated to the apparatus 2100 or that the apparatus 2100 may be connected to. The at least one transmitter comprises at least one transmission antenna, and the at least one receiver comprises at least one receiving antenna. The connectivity unit 2150 may comprise an integrated circuit or a set of integrated circuits that provide the wireless communication capability for the apparatus 2100. Alternatively, the wireless connectivity may be a hardwired application-specific integrated circuit (ASIC). The connectivity unit 2150 may also provide means for performing at least some of the blocks of one or more example embodiments described above. The connectivity unit 2150 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 2100 may further comprise various components not illustrated in FIG. 21. The various components may be hardware components and/or software components.

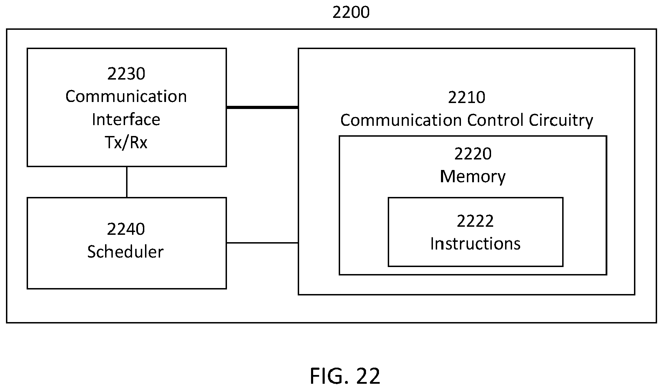

FIG. 22 illustrates an example of an apparatus 2200 comprising means for performing one or more of the example embodiments described above. For example, the apparatus 2200 may be an apparatus such as, or comprising, or comprised in, a network element of a radio access network. The network element may correspond to the access node 104 of FIG. 1. The network element may also be referred to, for example, as a network node, a radio access network (RAN) node, a next generation radio access network (NG-RAN) node, a NodeB, an eNB, a gNB, a base transceiver station (BTS), a base station, an NR base station, a 5G base station, an access node, an access point (AP), a relay node, a repeater, an integrated access and backhaul (IAB) node, an IAB donor node, a distributed unit (DU), a central unit (CU), a baseband unit (BBU), a radio unit (RU), a radio head, a remote radio head (RRH), or a transmission and reception point (TRP).

The apparatus 2200 may comprise, for example, a circuitry or a chipset applicable for realizing one or more of the example embodiments described above. The apparatus 2200 may be an electronic device comprising one or more electronic circuitries. The apparatus 2200 may comprise a communication control circuitry 2210 such as at least one processor, and at least one memory 2220 storing instructions 2222 which, when executed by the at least one processor, cause the apparatus 2200 to carry out one or more of the example embodiments described above. Such instructions 2222 may, for example, include a computer program code (software), wherein the at least one memory and the computer program code (software) are configured, with the at least one processor, to cause the apparatus 2200 to carry out one or more of the example embodiments described above. The at least one processor and the at least one memory storing the instructions may provide the means for providing or causing the performance of any of the methods and/or blocks described above.

The processor is coupled to the memory 2220. The processor is configured to read and write data to and from the memory 2220. The memory 2220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 2220 stores computer readable instructions that are executed by the processor. For example, non-volatile memory stores the computer readable instructions and the processor executes the instructions using volatile memory for temporary storage of data and/or instructions.

The computer readable instructions may have been pre-stored to the memory 2220 or, alternatively or additionally, they may be received, by the apparatus, via an electromagnetic carrier signal and/or may be copied from a physical entity such as a computer program product. Execution of the computer readable instructions causes the apparatus 2200 to perform one or more of the functionalities described above.

The memory 2220 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data. For example, the configuration database may store a current neighbour cell list, and, in some example embodiments, structures of the frames used in the detected neighbour cells.

The apparatus 2200 may further comprise a communication interface 2230 comprising hardware and/or software for realizing communication connectivity according to one or more communication protocols. The communication interface 2230 comprises at least one transmitter (Tx) and at least one receiver (Rx) that may be integrated to the apparatus 2200 or that the apparatus 2200 may be connected to. The communication interface 2230 may provide means for performing some of the blocks for one or more example embodiments described above. The communication interface 2230 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 2230 provides the apparatus with radio communication capabilities to communicate in the cellular communication system. The communication interface may, for example, provide a radio interface to one or more user devices. The apparatus 2200 may further comprise another interface towards a core network such as the network coordinator apparatus or AMF, and/or to the access nodes of the cellular communication system.

The apparatus 2200 may further comprise a scheduler 2240 that is configured to allocate radio resources. The scheduler 2240 may be configured along with the communication control circuitry 2210 or it may be separately configured.

It is to be noted that the apparatus 2200 may further comprise various components not illustrated in FIG. 22. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the example embodiments described above, but may vary within the scope of the claims. Therefore, all words and expressions should be interpreted broadly, and they are intended to illustrate, not to restrict, the example embodiments.

**Claims**

1. An apparatus comprising:

   means for receiving first information indicating a first excess band;
   means for receiving second information indicating a second excess band;
   means for determining a third excess band for one or more multi-slot uplink transmissions, wherein the third excess band is determined based on the first excess band and the second excess band; and
   means for transmitting the one or more multi-slot uplink transmissions over multiple slots with the third excess band.

2. The apparatus according to claim 1, wherein the one or more multi-slot uplink transmissions are transmitted by using the third excess band for frequency-domain spectrum shaping with spectrum extension, FDSS-SE, and
   wherein the one or more multi-slot uplink transmissions comprise at least one of: a transport block over multiple slots, TBoMS, or physical uplink shared channel, PUSCH, repetitions.

3. The apparatus according to claim 2, wherein the FDSS-SE is used for the TBoMS based on determining that a transport block size of the transport block is larger than a threshold above which code block segmentation occurs.

4. The apparatus according to any preceding claim, further comprising:

   means for determining a subset of the multiple slots, wherein the subset comprises systematic bits; and
   means for using FDSS-SE for the one or more multi-slot uplink transmissions in the subset.

5. The apparatus according to any preceding claim, further comprising:

   means for determining whether joint channel estimation is applied over the multiple slots, or whether the apparatus has a constraint associated with using different waveforms in the multiple slots; and
means for, based on determining that the joint channel estimation is applied over the multiple slots or that the apparatus has the constraint, transmitting the one or more multi-slot uplink transmissions by using a same waveform in the multiple slots.

6. The apparatus according to any preceding claim, further comprising:

   means for determining whether the one or more multi-slot uplink transmissions comprise a TBoMS retransmission; and
   means for, based on determining that the one or more multi-slot uplink transmissions comprise the TBoMS retransmission, using FDSS-SE in the TBoMS retransmission.

7. The apparatus according to any preceding claim, further comprising:

   means for determining whether the one or more multi-slot uplink transmissions comprise an initial TBoMS transmission; and
   means for, based on determining that the one or more multi-slot uplink transmissions comprise the initial TBoMS transmission, using FDSS-SE in the initial TBoMS transmission.

8. The apparatus according to any preceding claim, further comprising:

   means for determining whether the one or more multi-slot uplink transmissions comprise a TBoMS repetition;
   means for, based on determining that the one or more multi-slot uplink transmissions comprise the TBoMS repetition, and based on an FDSS-SE mode of the apparatus, determining a waveform for the TBoMS repetition, wherein the FDSS-SE mode indicates whether to use FDSS-SE; and
   means for using the waveform and the FDSS-SE mode for transmitting the TBoMS repetition.

9. The apparatus according to any preceding claim, further comprising:

   means for determining whether the one or more multi-slot uplink transmissions comprise a TBoMS transmission on more than one layer; and
   means for, based on determining that the one or more multi-slot uplink transmissions comprise the TBoMS transmission on the more than one layer, using FDSS-SE in the TBoMS transmission on the more than one layer.

10. An apparatus comprising:

means for transmitting first information indicating a first excess band;
means for transmitting second information indicating a second excess band; and
means for receiving one or more multi-slot uplink transmissions over multiple slots with a third excess band, wherein the third excess band is based on the first excess band and the second excess band.

11. The apparatus according to claim 10, wherein the one or more multi-slot uplink transmissions comprise at least one of: a transport block over multiple slots, TBoMS, or physical uplink shared channel, PUSCH, repetitions.

12. The apparatus according to claim 10 or 11, wherein the second information is for configured grant type 1.

13. The apparatus according to claim 10 or 11, further comprising:
means for indicating a row of a time-domain resource allocation table for configured grant type 2 or for a dynamic grant, wherein the row comprises at least one column, wherein the at least one column comprises at least one of the following: the second information or the second excess band or the third excess band.

14. A method comprising:

receiving first information indicating a first excess band;
receiving second information indicating a second excess band;
determining a third excess band for one or more multi-slot uplink transmissions, wherein the third excess band is determined based on the first excess band and the second excess band; and
transmitting the one or more multi-slot uplink transmissions over multiple slots with the third excess band.

15. A method comprising:

transmitting first information indicating a first excess band;
transmitting second information indicating a second excess band; and
receiving one or more multi-slot uplink transmissions over multiple slots with a third excess band, wherein the third excess band is based on the first excess band and the second excess band.

FIG. 1

201

202

Time

FIG. 2

301

302

FIG. 3

401

402

FIG. 4

Slot boundary

501        502

FIG. 5

FIG. 6

FIG. 7

FIG. 8

```
gNB                                    UE

       901: CommonExcessBandConfig
  ─────────────────────────────────────►

       902: ConfigGrantExcessBandConfig
  ─────────────────────────────────────►

                                  ┌──────────────┐
                                  │     903:     │
                                  │  Determine   │
                                  │ excess band  │
                                  │    to use    │
                                  └──────────────┘

            904: UL transmission
  ◄─────────────────────────────────────
              with excess band
```

FIG. 9

FIG. 10

| 1101 | Receive first information indicating a first excess band |
|------|------|

| 1102 | Receive second information indicating a second excess band |
|------|------|

| 1103 | Determine a third excess band based on the first excess band and the second excess band |
|------|------|

| 1104 | Transmit one or more multi-slot uplink transmissions over multiple slots with the third excess band |
|------|------|

FIG. 11

| 1201 | Transmit first information indicating a first excess band |
|---|---|

| 1202 | Transmit second information indicating a second excess band |
|---|---|

| 1203 | Receive one or more multi-slot uplink transmissions over multiple slots with a third excess band based on the first excess band and the second excess band |
|---|---|

FIG. 12

| 1301 | Receive first information indicating a first excess band |
|------|----------------------------------------------------------|
| 1302 | Receive second information indicating a second excess band |
| 1303 | Determine a third excess band based on the first excess band and the second excess band |
| 1304 | Determine a subset of multiple slots, wherein the subset comprises systematic bits |
| 1305 | Transmit one or more multi-slot uplink transmissions over the multiple slots with the third excess band using FDSS-SE in the subset |

FIG. 13

1401 | Receive first information indicating a first excess band

1402 | Receive second information indicating a second excess band

1403 | Determine a third excess band based on the first excess band and the second excess band

1404 | Joint channel estimation applied or constraint?

Yes

1405 | Transmit one or more multi-slot uplink transmissions over multiple slots with the third excess band by using the same waveform in the multiple slots

FIG. 14

Slot type

| U | U | D | D | S | U | U | D | D | S |
|---|---|---|---|---|---|---|---|---|---|

1501  1502

Time

FIG. 15

| | |
|---|---|
| 1601 | Receive first information indicating a first excess band |
| 1602 | Receive second information indicating a second excess band |
| 1603 | Determine a third excess band based on the first excess band and the second excess band |
| 1604 | TBS above threshold? |
| 1605 | Transmit one or more multi-slot uplink transmissions over multiple slots with the third excess band |

Yes

FIG. 16

| 1701 | Receive first information indicating a first excess band |
|---|---|
| 1702 | Receive second information indicating a second excess band |
| 1703 | Determine a third excess band based on the first excess band and the second excess band |

1704 — TBoMS retransmission?

↓ Yes

| 1705 | Transmit TBoMS retransmission with the third excess band using FDSS-SE |

FIG. 17

1801 | Receive first information indicating a first excess band

1802 | Receive second information indicating a second excess band

1803 | Determine a third excess band based on the first excess band and the second excess band

1804 — Initial TBoMS transmission?

↓ Yes

1805 | Transmit initial TBoMS transmission with the third excess band using FDSS-SE

FIG. 18

1901 | Receive first information indicating a first excess band

1902 | Receive second information indicating a second excess band

1903 | Determine a third excess band based on the first excess band and the second excess band

1904 | TBoMS repetition?

Yes

1905 | Determine a waveform for the TBoMS repetition based on FDSS-SE mode

1906 | Transmit the TBoMS repetition using the waveform and the FDSS-SE mode

FIG. 19

| 2001 | Receive first information indicating a first excess band |
| --- | --- |

| 2002 | Receive second information indicating a second excess band |
| --- | --- |

| 2003 | Determine a third excess band based on the first excess band and the second excess band |
| --- | --- |

2004 — More than one layer?

↓ Yes

| 2005 | Transmit TBoMS transmission with the third excess band using FDSS-SE on more than one layer |
| --- | --- |

FIG. 20

2100

FIG. 21

2200

```
┌─────────────────────────────────────────────────────────────────────┐
│                                                                       │
│  ┌───────────────────┐       ┌──────────────────────────────────┐   │
│  │       2230        │       │              2210                │   │
│  │   Communication   │       │   Communication Control Circuitry│   │
│  │     Interface     │━━━━━━━│  ┌────────────────────────────┐  │   │
│  │       Tx/Rx       │       │  │           2220             │  │   │
│  │                   │       │  │          Memory            │  │   │
│  └─────────┬─────────┘       │  │   ┌────────────────────┐   │  │   │
│            │                 │  │   │       2222          │   │  │   │
│  ┌─────────┴─────────┐       │  │   │    Instructions     │   │  │   │
│  │       2240        │       │  │   └────────────────────┘   │  │   │
│  │     Scheduler     │───────│  └────────────────────────────┘  │   │
│  │                   │       │                                  │   │
│  └───────────────────┘       └──────────────────────────────────┘   │
│                                                                       │
└─────────────────────────────────────────────────────────────────────┘
```

FIG. 22

Europäisches
Patentamt

European
Patent Office

Office européen
des brevets

# EUROPEAN SEARCH REPORT

Application Number

EP 23 19 8164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2022/161836 A1 (NOKIA TECHNOLOGIES OY [FI]) 4 August 2022 (2022-08-04) <br> * abstract * <br> * page 14, line 5 – line 16; figure 3 * <br> * page 19, line 22 – page 20, line 27 * <br> * page 23, line 20 – page 24, line 4 * <br> * figure 11 * | 1–15 | INV. <br> H04W72/0453 <br> H04W72/0457 <br> H04W74/00 <br> H04L25/00 <br> H04L27/00 |
| Y | US 2022/045789 A1 (KARMOOSE MOHAMMED [US] ET AL) 10 February 2022 (2022-02-10) <br> * abstract * <br> * paragraphs [0089], [0124] – [0126] * <br> * paragraphs [0169] – [0170] * <br> * paragraphs [0229] – [0230] * | 1–15 | |
| A | WO 2022/152368 A1 (NOKIA TECHNOLOGIES OY [FI]) 21 July 2022 (2022-07-21) <br> * paragraphs [0040] – [0043] * | 1–15 | |
| | | | TECHNICAL FIELDS SEARCHED (IPC) <br><br> H04W <br> H04L |

The present search report has been drawn up for all claims

| Place of search | Date of completion of the search | Examiner |
|---|---|---|
| The Hague | 26 February 2024 | Jurca, Dan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 8164

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2024

| Patent document cited in search report | | Publication date | Patent family member(s) | | Publication date |
|---|---|---|---|---|---|
| WO 2022161836 | A1 | 04-08-2022 | CN | 116982298 A | 31-10-2023 |
| | | | EP | 4285556 A1 | 06-12-2023 |
| | | | WO | 2022161836 A1 | 04-08-2022 |
| US 2022045789 | A1 | 10-02-2022 | CN | 114070466 A | 18-02-2022 |
| | | | EP | 3958488 A1 | 23-02-2022 |
| | | | KR | 20220018459 A | 15-02-2022 |
| | | | TW | 202207676 A | 16-02-2022 |
| | | | US | 2022045789 A1 | 10-02-2022 |
| WO 2022152368 | A1 | 21-07-2022 | EP | 4278573 A1 | 22-11-2023 |
| | | | US | 2024015786 A1 | 11-01-2024 |
| | | | WO | 2022152368 A1 | 21-07-2022 |

EPO FORM P0459

For more details about this annex : see Official Journal of the European Patent Office, No. 12/82